# EUROPÄISCHE PATENTANMELDUNG

(11) **EP 4 380 177 A1**
(43) Veröffentlichungstag der Anmeldung: **05.06.2024**
(21) Anmeldenummer: 23210330.9
(22) Anmeldetag: 16.11.2023
(51) Int. Cl.: H04N 23/69

(54) **SICHTSYSTEM FÜR EIN FAHRZEUG**

(30) Priorität: 29.11.2022 DE 102022131603
(71) Anmelder: MAN Truck & Bus SE, 80995 München (DE)
(72) Erfinder: Pappenheimer, Andreas, 80995 München (DE)
(74) Vertreter: v. Bezold & Partner Patentanwälte - PartG mbB

(57) **Zusammenfassung**

Die vorliegende Erfindung betrifft ein Sichtsystem (1) für ein Fahrzeug (2), das eine Anzeigeeinheit (7) und eine Eingabeeinheit (8) für einen Fahrer des Fahrzeugs (2) umfasst. Die Erfindung betrifft ferner ein Spiegelersatzsystem für ein Kraftfahrzeug und ein Kraftfahrzeug mit einem solchen Sichtsystem.

Das Sichtsystem (1) umfasst eine Anzeigeeinheit (7) und eine Eingabeeinheit (8) für einen Fahrer des Fahrzeugs (2). Ferner umfasst das Sichtsystem eine Aufnahmeeinheit (9) zur Aufnahme von Bilddaten eines äußeren Sichtfelds (10), vorzugsweise eines seitlichen rückwärtigen Sichtfelds, des Fahrzeugs (2) sowie eine mit der Anzeigeeinheit (7), der Eingabeeinheit (8) und der Aufnahmeeinheit (9) in Signalverbindung stehende oder bringbare Steuerungseinheit (11). Die Steuerungseinheit (11) ist dazu ausgebildet, Bilddaten des aufgenommen Sichtfelds (10) und ein Auswahlwerkzeug (13) zur Auswahl einer Fokusstelle (14) des Sichtfelds (10) an der Anzeigeeinheit (7) anzuzeigen, wobei die Fokusstelle (14) mittels des Auswahlwerkzeugs (13) durch eine Betätigung der Eingabeeinheit (8) festlegbar ist. Ferner ist die Steuerungseinheit (11) dazu ausgebildet, in Reaktion auf die Betätigung der Eingabeeinheit (8) die Fokusstelle (14) festzulegen und eine Vergrößerungsfunktion (19) bereitzustellen, mittels derer die festgelegte Fokusstelle (14) vergrößert auf der Anzeigeeinheit (7) darstellbar ist. Mithilfe dieser Vorrichtung kann vorteilhaft die Nutzerfreundlichkeit eines Sichtsystems für ein Fahrzeug verbessert werden.

## Beschreibung

Die Erfindung betrifft ein Sichtsystem für ein Fahrzeug, das eine Anzeigeeinheit und eine Eingabeeinheit für einen Fahrer des Fahrzeugs umfasst. Die Erfindung betrifft ferner ein Spiegelersatzsystem für ein Kraftfahrzeug und ein Kraftfahrzeug mit einem solchen Sichtsystem.

Aus dem Stand der Technik sind Sichtsysteme für Fahrzeuge, insbesondere für Nutzfahrzeuge, bekannt, bei denen herkömmliche Außenspiegel durch Kamera-Monitor-Systeme ergänzt oder vollständig ersetzt werden, als Teil eines sog. Spiegel-Ersatz-Systems. Vorteile sind der im Vergleich zu einem Außenspiegel geringere Luftwiderstand der außen am Fahrzeug angebrachten Kamera sowie die bequeme Nutzungsmöglichkeit für den Fahrer. Das von der Kamera aufgenommene Bild wird auf einem Monitor dargestellt, der an einer für den Fahrer gut einsehbaren Stelle im Fahrzeug montiert wird. Auf dem Monitor können zudem Bilddaten mehrerer Sichtbereiche gleichzeitig dargestellt werden, sodass der Fahrer auf einen Blick einen guten Überblick über die Fahrzeugumgebung erhält. Außerdem werden die von der Kamera aufgenommenen Bilddaten auf dem Monitor weitgehend unverzerrt dargestellt, während insbesondere Weitwinkelspiegel dem Fahrer nur ein verzerrtes Bild der Umgebung liefern, sodass die Einschätzung der realen Abstands- und Größenverhältnisse von Objekten in der Fahrzeugumgebung erschwert ist. Zudem ist es möglich, auf dem Monitorbild zusätzliche, für den Fahrer nützliche Informationen einzublenden oder Hindernisse hervorzuheben.

Um dem Fahrer einen möglichst umfassenden Überblick über die Fahrzeugumgebung zu ermöglichen, decken die von den Kameras aufgenommenen Sichtfelder üblicherweise einen vergleichsweise großen Bereich ab. Damit kann der Fahrer auf einen Blick erkennen, was in der Umgebung des Fahrzeugs passiert, und so seine Fahrweise vorrausschauend an die jeweilige Situation anpassen. Die Fülle an Informationen hat allerdings auch den Nachteil, dass ein kurzer, schneller Blick auf ein bestimmtes Detail schwierig ist. Der Fahrer könnte abgelenkt werden, wenn er eine bestimmte Stelle des Fahrzeugs oder der Fahrzeugumgebung genauer betrachten möchte.

Der Erfindung liegt daher die Aufgabe zu Grunde, eine verbesserte Technik zur Ausgestaltung eines Sichtsystems für ein Fahrzeug zu schaffen, mit der Nachteile herkömmlicher Sichtsysteme verhindert werden können. Insbesondere soll das dargestellte Sichtfeld eine verbesserte Sicherheit bei Rangiervorgängen des Fahrzeugs ermöglichen.

Die Aufgabe wird durch die Merkmale des unabhängigen Anspruchs 1 gelöst. Vorteilhafte Weiterbildungen sind in den abhängigen Ansprüchen und der Beschreibung angegeben.

Gemäß einem allgemeinen Gesichtspunkt der vorliegenden Offenbarung wird ein Sichtsystem für ein Fahrzeug, das eine Anzeigeeinheit und eine Eingabeeinheit für einen Fahrer des Fahrzeugs umfasst, bereitgestellt. Weiterhin umfasst das Sichtsystem eine Aufnahmeeinheit, z. B. eine Kamera, zur Aufnahme von Bilddaten eines äußeren Sichtfelds, vorzugsweise eines seitlichen rückwärtigen Sichtfelds, des Fahrzeugs. Die Aufnahmeeinheit kann beispielsweise mittels einer Halterung an einer Außenwand des Fahrzeugs angeordnet und/oder anordenbar sein. Das von der Aufnahmeeinheit aufgenommene Sichtfeld kann beispielsweise das Sichtfeld, das dem Sichtfeld eines Hauptrückspiegels und/oder eines Weitwinkelspiegels entspricht, umfassen und kann in diesem Fall bevorzugt die gesetzlichen Sichtfelder der Klassen II und IV entsprechend der ECE R46/04 Norm abdecken. Das Sichtsystem kann Teil eines Spiegelersatzsystems des Fahrzeugs sein.

Ferner umfasst das Sichtsystem eine mit der Anzeigeeinheit, der Eingabeeinheit und der Aufnahmeeinheit in Signalverbindung stehende oder bringbare Steuerungseinheit. Die Steuerungseinheit ist dazu ausgebildet, Bilddaten des aufgenommenen Sichtfelds und ein Auswahlwerkzeug zur Auswahl einer Stelle des Sichtfelds an der Anzeigeeinheit anzuzeigen. Diese mittels des Auswahlwerkzeugs auswählbare Stelle des Sichtfelds wird nachfolgend als Fokusstelle bezeichnet. Die Fokusstelle ist mittels des Auswahlwerkzeugs durch eine Betätigung der Eingabeeinheit festlegbar. Bei der Fokusstelle kann es sich um einen Punkt (Fokuspunkt) oder um einen Bereich (Fokusbereich) des aufgenommenen Sichtfelds handeln, welchen z. B. der Fahrer im Blick behalten möchte und insbesondere ggf. vergrößert angezeigt haben möchte. Beispielsweise ist mittels des Auswahlwerkzeugs ein Teilbereich des Fahrzeugs und/oder eine Stelle einer Fahrzeugumgebung, z. B. ein Hindernis oder eine Parklücke, als Fokusstelle auswählbar. Die Fokusstelle ist mittels des Auswahlwerkzeugs durch eine Betätigung der Eingabeeinheit festlegbar.

Ferner ist die Steuerungseinheit dazu ausgebildet, in Reaktion auf die Betätigung der Eingabeeinheit die Fokusstelle festzulegen und eine Vergrößerungsfunktion bereitzustellen, mittels derer die festgelegte Fokusstelle vergrößert auf der Anzeigeeinheit darstellbar ist.

Durch die vorliegende Offenbarung wird somit ein Sichtsystem für ein Fahrzeug bereitgestellt, das es dem Fahrer ermöglicht, einen Teilbereich des aufgenommenen Sichtfelds auszuwählen, das bei Aktivierung der Vergrößerungsfunktion vergrößert auf der Anzeigeeinheit dargestellt wird.

Im allgemeinen Fahrbetrieb möchte der Fahrer in vielen Fällen einen vergleichsweise großen Bereich des aufgenommenen Sichtfelds auf der Anzeigeeinheit dargestellt bekommen, um auf einen Blick einen guten Überblick über die Fahrzeugumgebung zu erhalten. Auf diese Weise kann er seine Fahrweise vorrausschauend an die Umgebung anpassen und so eine sichere und unfallvermeidende Fahrweise ermöglichen. Es kommt aber vor, dass kurzfristig bestimmte Stellen des Fahrzeugs oder der Fahrzeugumgebung besonderer Aufmerksamkeit benötigen. Auf einer Anzeigeeinheit, auf der Bilddaten eines vergleichsweise großen Teilbereichs des aufgenommenen Sichtfelds dargestellt sind, könnten diese Stellen vergleichsweise klein und damit für den Fahrer schwer zu erkennen sein. Das vorliegende Sichtsystem gibt dem Fahrer vorteilhaft die Möglichkeit, eine für ihn in der aktuellen Fahrsituation besonders relevante oder kritische Stelle im Sichtfeld, die besonderer Aufmerksamkeit bedarf, als Fokusstelle auszuwählen und diese bei Bedarf vergrößert darzustellen. Auf diese Weise sind Details dieser Fokusstelle besser erkennbar. Zur Umsetzung der Vergrößerungsfunktion kann die Steuerungseinheit ausgebildet sein, den entsprechenden Bereich des Sichtfelds auf der Anzeigeeinheit heranzuzoomen.

Gemäß einer vorteilhaften Ausführungsform umfasst die Eingabeeinheit ein vorbestimmtes Bedienelement, vorzugsweise einen Taster, zur Aktivierung der Vergrößerungsfunktion. Dieses Bedienelement wird nachfolgend als Zoom-Bedienelement bezeichnet. Die Steuerungseinheit kann dazu ausgebildet sein, in Reaktion auf eine Betätigung des Zoom-Bedienelements die Vergrößerungsfunktion zu aktivieren. Der Fahrer bekommt auf diese Weise eine besonders unkomplizierte Möglichkeit, die Vergrößerungsfunktion genau dann zu aktivieren, wenn sie gerade benötigt wird. Ein Taster kann insbesondere während der Fahrt schnell, präzise und intuitiv betätigt werden, sodass der Fahrer während der Fahrt nicht oder nur minimal durch die Bedienung des Sichtsystems abgelenkt wird.

In einer bevorzugten Weiterbildung hiervon ist die Steuerungseinheit dazu ausgebildet, die aktivierte Vergrößerungsfunktion in Reaktion auf eine erneute Betätigung des Zoom-Bedienelements oder in Reaktion auf eine Betätigung eines weiteren Bedienelements der Eingabeeinheit wieder zu deaktivieren. Der Vorteil dieser Ausführungsvariante besteht darin, dass die Vergrößerungsfunktion besonders gezielt aktiviert und deaktiviert werden kann, da die Vergrö-βerungsfunktion genau für den Zeitraum aktiviert ist, bis das Zoom-Bedienelement oder ein weiteres Bedienelement erneut betätigt wird.

Zusätzlich oder alternativ kann die Steuerungseinheit dazu ausgebildet sein, die aktivierte Vergrößerungsfunktion nach einer vorbestimmten Zeitdauer wieder zu deaktivieren. In diesem Fall aktiviert der Fahrer die Vergrößerungsfunktion, wenn er sie benötigt, anschließend deaktiviert sich die Vergrößerungsfunktion, lediglich beispielsweise nach einigen Sekunden, z. B. nach 10 Sekunden, automatisch selbst. Der Vorteil dieser Variante besteht darin, dass der Fahrer die Betätigungseinrichtung nur einmal kurz betätigen muss. Die vorbestimmte Zeitdauer reicht aus, um den gewünschten Kontrollblick auf die vergrößert dargestellte Fokusstelle vorzunehmen. Dann deaktiviert sich die Vergrößerungsfunktion wieder, ohne dass der Fahrer eine weitere Eingabe vornehmen muss. Der Fahrer kann daher die Kontrolle der Fokusstelle mit minimaler Ablenkung vornehmen.

Gemäß einer weiteren vorteilhaften Ausführungsform ist die Steuerungseinheit dazu ausgebildet, falls noch keine Fokusstelle mittels der Eingabeeinheit festgelegt wurde, einen vorbestimmten Teilbereich des Sichtfelds als Fokusstelle festzulegen, die in Reaktion auf eine Aktivierung der Vergrößerungsfunktion vergrößert auf der Anzeigeeinheit dargestellt wird. Der vorbestimmte Teilbereich kann beispielsweise Stellen des Fahrzeugs umfassen, die erfahrungsgemäß häufig besonders relevant sind, und kann vorzugsweise vom Fahrzeughersteller vorgegeben werden. Der Fahrer kann dann direkt die Vergrößerungsfunktion aktivieren, ohne vorher eine Fokusstelle festlegen zu müssen, sodass die Ablenkung für den Fahrer verringert werden kann.

In einer weiteren Ausführungsform kann die Steuerungseinheit dazu ausgebildet sein, die ausgewählte Fokusstelle zu speichern, vorzugsweise in einem nicht-flüchtigen Speicher und/oder zusammen mit Daten zu einem wechselbaren Anhänger des Fahrzeugs zu speichern. Auf diese Weise kann der Fahrer Fokusstellen, die auch für die Durchführung nachfolgender Manöver von Belang sein könnten, speichern und später, bei Bedarf, unkompliziert wieder aufrufen, ohne die Fokusstelle erneut einstellen zu müssen. Wird ein nicht-flüchtiger Speicher als Speichermedium verwendet, kann die Fokusstelle auch nach einem vollständigen Abschalten bzw. Parken und Wieder-Anschalten des Fahrzeugs aufgerufen werden. Die Funktion, die Fokusstelle zusammen mit Daten zu einem wechselbaren Anhänger zu speichern, kann etwa von Vorteil sein, wenn es sich bei dem Fahrzeug um beispielsweise einen Sattelschlepper mit einem wechselbaren Anhänger handelt. Besonders relevante Stellen des Anhängers, beispielsweise die hintere obere Ecke, variieren mit der Form und der Größe des Anhängers. Entsprechend kann es für den Fahrer besonders vorteilhaft sein, genau diejenige(n) gespeicherte(n) Fokusstelle(n) aufrufen zu können, die auch zu dem jeweiligen Anhänger gespeichert wurde(n). In vielen Fällen ist es bereits möglich, Daten zum Anhänger (Gewicht, Achslasten, besondere Funktionen des Anhängers, ...) in der Zugmaschine zu speichern. Fokusstellen könnten daher gemeinsam mit diesen Daten gespeichert und beim Anhängen des Anhängers automatisch dem Fahrer zur Verfügung gestellt werden.

Gemäß einer weiteren Ausführungsform kann die Steuerungseinheit dazu ausgebildet sein, eine Vorauswahl zur Auswahl möglicher Fokusstellen auf der Anzeigeeinheit anzuzeigen. Vorteilhaft kann die Vorauswahl beispielsweise Stellen des Fahrzeugs umfassen, die erfahrungsgemäß häufig besonders relevant sind und in der Praxis vom Fahrer oftmals in vergrößerter Ansicht gewünscht werden. Die Auswahl einer Fokusstelle wird erleichtert und beschleunigt. Aus der Vorauswahl kann der Fahrer z. B. durch eine Touch-Eingabe auf der Anzeigeeinheit die für ihn aktuelle relevante Stelle schnell und zuverlässig auswählen. Die Bediensicherheit des Sichtsystems wird hierdurch verbessert.

Dabei kann die Auswahl möglicher Fokusstellen vorzugsweise zumindest eine der folgenden umfassen: eine obere hintere Ecke des Fahrzeugs, eines Fahrzeugaufbaus und/oder eines Anhängers, und/oder eine Begrenzungsleuchte des Fahrzeugs, eines Fahrzeugaufbaus oder eines Anhängers des Fahrzeugs, einen Reifen einer hintersten Achse des Fahrzeugs, ein Befestigungsmittel einer Ladung des Fahrzeugs, ein Hindernis, eine Parklücke und ein nachfolgendes Fahrzeug einer Fahrzeugkolonne, vorzugsweise einer Fahrzeugkolonne im Autobahnbetrieb.

Diese Vorauswahl möglicher Fokusstellen ermöglicht dem Fahrer eine besonders einfache und schnelle Auswahl einer Fokusstelle, die für die Vergrößerungsfunktion verwendet werden soll. Mögliche Fokusstellen können beispielsweise vom Fahrzeughersteller vorgegeben werden. Der Fahrer braucht nur noch eine der möglichen Fokusstellen auszuwählen, ohne selbst manuell die Stelle einstellen zu müssen. Auf diese Weise kann die Ablenkung des Fahrers reduziert und damit die Fahrsicherheit erhöht werden.

Gemäß einer weiteren vorteilhaften Ausführungsform kann das Auswahlwerkzeug zur Auswahl der Fokusstelle zumindest eines der folgenden auf der Anzeigeeinheit angezeigten Elemente umfassen: ein Fadenkreuz, eine Lupe und Navigationspfeile zur Richtungsverschiebung der Fokusstelle. Derartige Elemente werden in vielen Fällen zur Auswahl von Bereichen oder Punkten verwendet und stellen daher eine besonders intuitive Lösung zur Auswahl der Fokusstelle dar.

In einer weiteren bevorzugten Ausführungsform umfasst die Eingabeeinheit zur Steuerung des Auswahlwerkzeugs Pfeiltasten, einen Bedienhebel, z. B. einen Joystick, und/oder eine berührungsempfindliche Fläche der Anzeigeeinheit. Haptische Bedienelemente können besonders während wackeliger Fahrt zielsicher vom Fahrer bedient werden. Die Verwendung einer berührungsempfindlichen Fläche bietet die Möglichkeit einer besonders flexiblen Gestaltung des Fahrgastraums und bietet insbesondere die Möglichkeit zur Gestaltung eines besonders ansprechenden und aufgeräumten Designs.

Gemäß einer bevorzugten Ausführungsform kann die Eingabeeinheit einen schwenkbaren und drehbaren Bedienhebel, beispielsweise einen schwenkbaren und drehbaren Joystick, umfassen. Ferner kann vorgesehen sein, dass durch Drehung des Bedienhebels ein Vergrößerungsfaktor für die Darstellung der Fokusstelle veränderbar ist. Zusätzlich oder alternativ kann durch Verschwenken des Bedienhebels das Auswahlwerkzeug zur Auswahl der Fokusstelle bedient werden, und/oder durch Betätigung eines am Bedienhebels und/oder angrenzend hierzu angebrachten Tasters kann die Vergrößerungsfunktion aktiviert werden. Das Verschwenken des Bedienhebels kann dabei, je nach Ausgestaltung, durch eine Schwenkbewegung oder eine seitliche Verschiebung des Bedienhebels erfolgen. Der Taster zur Aktivierung der Vergrößerungsfunktion kann entweder direkt am Bedienhebel oder angrenzend hierzu, z B. in unmittelbarer Nähe dazu, angebracht sein, sodass der Fahrer den Taster erreichen kann, ohne die Hand vom Bedienhebel nehmen zu müssen.

Ein solcher Bedienhebel stellt eine besonders einfache Bedienmöglichkeit für den Fahrer zur Verfügung, da er mit einem einzigen Bedienhebel, je nach Ausführungsvariante, das Auswahlwerkzeug zur Auswahl der Fokusstelle steuern und/oder den Vergrößerungsfaktor einstellen und/oder die Vergrößerungsfunktion aktivieren kann. Die Ausgestaltung als haptisches Bedienelement kann auch während der Fahrt zielsicher vom Fahrer bedient werden. Sobald der Fahrer mit der Steuerung vertraut ist, braucht er das Bedienelement dazu nicht einmal mehr anzusehen, sodass die Fahrsicherheit weiter erhöht wird.

In einer bevorzugten Weiterbildung hiervon wird die Funktion, den Bedienhebel durch Verschwenken zur Steuerung des Auswahlwerkzeugs zu verwenden, gesperrt, wenn die Vergrö-βerungsfunktion aktiviert ist, und wieder entsperrt, wenn die Vergrößerungsfunktion nicht aktiviert ist. Auf diese Weise führen versehentliche Handbewegungen des Fahrers bei aktivierter Vergrößerungsfunktion nicht zu einer ungewollten Änderung des vergrößert angezeigten Bereichs des aufgenommenen Sichtfelds, wenn der Fahrer die Hand bei aktivierter Vergrößerungsfunktion am Bedienhebel belässt. Die Funktion, durch Drehung des Bedienhebels den Vergrößerungsfaktor einzustellen, wird vorzugsweise nicht gesperrt. Vorteilhaft kann so eine ungewollte Veränderung der Anzeige verhindert werden.

In einer weiteren Ausführungsform ist die Steuerungseinheit dazu ausgebildet, eine Konfiguration der Vergrößerungsfunktion abhängig von einem aktuellen Fahrbetriebsmodus des Fahrzeugs festzulegen. Der aktuelle Fahrbetriebsmodus kann vorzugsweise einen Rangierfahrbetrieb und mindestens einen Nicht-Rangierfahrbetrieb, beispielsweise eine Kolonnenfahrt und/oder eine Autobahnfahrt, des Fahrzeugs umfassen. Je nach Fahrbetriebsmodus können unterschiedliche Informationen für den Fahrer besonders relevant sein. Ein Umgebungshindernis, das sich seitlich zum Fahrzeug befindet, ist für den Fahrer während einer Autobahnfahrt weniger relevant. Dagegen könnte ein nachfolgendes Fahrzeug, das sich mit vorgeschriebenem Sicherheitsabstand hinter dem Fahrzeug befindet, von Bedeutung sein, insbesondere bei einer Kolonnenfahrt eines Nutzfahrzeugs. Bei einer Rangierfahrt sind dagegen eher Objekte in direkter Nähe des Fahrzeugs relevant. Die Steuerungseinheit kann auf die verschiedenen Fahrbetriebsmodi reagieren und z. B. zugehörige mögliche Fokusstellen vorschlagen -je nach Konfiguration der Vergrößerungsfunktion. Auf diese Weise wird dem Fahrer eine Konfiguration, d. h. eine Anpassung der Vergrößerungsfunktion, zur Verfügung gestellt, die für die jeweilige Situation besonders relevant ist, wobei unnötige Informationen und damit eine Ablenkung des Fahrers vermieden werden können.

Gemäß einer bevorzugten Ausführungsvariante kann die Konfiguration der Vergrößerungsfunktion umfassen, dass abhängig von dem aktuellen Fahrbetriebsmodus der vorbestimmte Teilbereich festgelegt wird, d. h., der vorbestimmte Teilbereich ist unterschiedlich für unterschiedliche Fahrbetriebsmodi. Der vorbestimmte Teilbereich ist derjenige, der, wie vorstehend beschrieben, als Fokusstelle festgelegt wird, falls noch keine Fokusstelle mittels der Eingabeeinheit festgelegt wurde.

Zudem oder alternativ kann die Konfiguration der Vergrößerungsfunktion umfassen, dass abhängig von dem aktuellen Fahrbetriebsmodus eine Aktivierungszeitdauer für die Vergrößerungsfunktion, nach deren Ablauf die Vergrößerungsfunktion automatisch deaktiviert wird, festgelegt wird.

Zudem oder alternativ kann die Konfiguration der Vergrößerungsfunktion umfassen, dass abhängig von dem aktuellen Fahrbetriebsmodus die Vorauswahl zur Auswahl möglicher Fokusstellen (wie sie vorstehend beschrieben wurde), festgelegt wird.

Auf diese Weise werden dem Fahrer diejenigen Informationen dargestellt, die für den jeweiligen Fahrbetriebsmodus besonders relevant sind.

Gemäß einer weiteren bevorzugten Ausführungsform ist die Steuerungseinheit dazu ausgebildet, die vergrößerte Darstellung der Fokusstelle und mindestens einen weiteren Teilbereich des aufgenommenen Sichtfelds, vorzugsweise in nicht-vergrößerter Darstellung, auf unterschiedlichen Anzeigeflächen der Anzeigeeinheit darzustellen. Damit steht dem Fahrer eine vergrößerte Detailansicht der Fokusstelle zur Verfügung, ohne dass er dabei die Fahrzeugumgebung aus dem Blick verliert. Außerdem können gesetzliche Vorgaben erfüllt werden, die eine dauerhafte Anzeige bestimmter Sichtfelder vorschreiben können.

Zusätzlich oder alternativ kann die Anzeigeeinheit eine Anzeigefläche eines Infotainmentsystems und/oder eine Anzeigefläche eines Spiegelersatzsystems und/oder eine Anzeigefläche eines Rückfahrkamerasystems umfassen. Derartige Anzeigeflächen sind in vielen Fahrzeugen bereits vorhanden. Durch die Verwendung von bereits vorhandenen Anzeigeflächen können Kosten reduziert werden. Außerdem ist ein besonders aufgeräumtes und damit wenig ablenkendes Design der Fahrzeugkabine möglich.

In einer weiteren Ausführungsform ist die Steuerungseinheit dazu ausgebildet, anzupassen, welcher Teilbereich des aufgenommenen Sichtfelds auf der Anzeigeeinheit in Form von Bilddaten angezeigt wird, derart, dass eine Anzeige der festlegten Fokusstelle in Abhängigkeit von einer Position der Aufnahmeeinheit relativ zur Fokusstelle an der Anzeigeeinheit nachgeführt wird. Anders ausgedrückt kann der auf der Anzeigeeinheit durch die Steuerungseinheit angezeigte Teilbereich (Bildausschnitt) so angepasst werden, dass der aktuell angezeigte Teilbereich (Bildausschnitt) immer die festgelegte Fokusstelle zumindest zum Teil umfasst, auch dann, wenn sich die Position der Aufnahmeeinheit relativ zur Fokusstelle ändert. Dies ist besonders vorteilhaft, wenn das Fahrzeug einen vorderen Fahrzeugteil, z. B. ein Zugfahrzeug, und einen hinteren Fahrzeugteil, z. B. einen Anhänger oder einen Auflieger, umfasst, wobei das vordere Fahrzeugteil und das hintere Fahrzeugteil um eine senkrechte Knickachse gegeneinander verschwenkbar sind.

Die Erfassung der relativen Position kann anhand von Fahrinformationen des Fahrzeugs, z B. der Geschwindigkeit und dem Lenkwinkel bestimmt werden. Zusätzlich oder alternativ können Techniken aus dem Bereich der Bilderkennung verwendet werden, um die festgelegte Fokusstelle nachzuführen. Ein besonderer Vorteil dieser Ausführungsform liegt darin, dass es dem Fahrer des Fahrzeugs ermöglicht wird, eine beliebige Stelle des aufgenommenen Sichtbereichs, die er im Blick behalten möchte, um z. B. einen bevorstehenden Rangiervorgang sicher durchführen zu können, als Fokusstelle auszuwählen. Diese Stelle verbleibt dann unabhängig von der Bewegung des Fahrzeugs oder der Oberkörperposition des Fahrers auf der Anzeige.

Gemäß einem weiteren allgemeinen Gesichtspunkt der vorliegenden Offenbarung wird ein Spiegelersatzsystem für ein Fahrzeug bereitgestellt, das ein Sichtsystem, wie hierin beschrieben, umfasst.

Ferner wird ein Fahrzeug, vorzugsweise Nutzfahrzeug, bereitgestellt, aufweisend ein Sichtsystem oder ein Spiegelersatzsystem, wie hierin beschrieben. Besonders bevorzugt handelt es bei dem Fahrzeug um einen Lkw, einen Bus, eine Baumaschine, einen Lastzug oder einen Sattelzug.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockdiagramm eines Sichtsystems gemäß einem Ausführungsbeispiel der vorliegenden Offenbarung;
- Figur 2: eine schematische Darstellung eines Fahrzeugs mit einem Sichtsystem gemäß einem weiteren Ausführungsbeispiel der vorliegenden Offenbarung;
- Figur 3: eine schematische Darstellung einer Anzeigeeinheit und einer Betätigungseinheit gemäß einem weiteren Ausführungsbeispiel der vorliegenden Offenbarung;
- Figur 4: eine schematische Darstellung einer Anzeigeeinheit gemäß einem weiteren Ausführungsbeispiel der vorliegenden Offenbarung; und
- Figur 5: eine schematische Darstellung eines Fahrzeugs in einer Fahrzeugkolonne mit einem Sichtsystem gemäß einem weiteren Ausführungsbeispiel der vorliegenden Offenbarung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

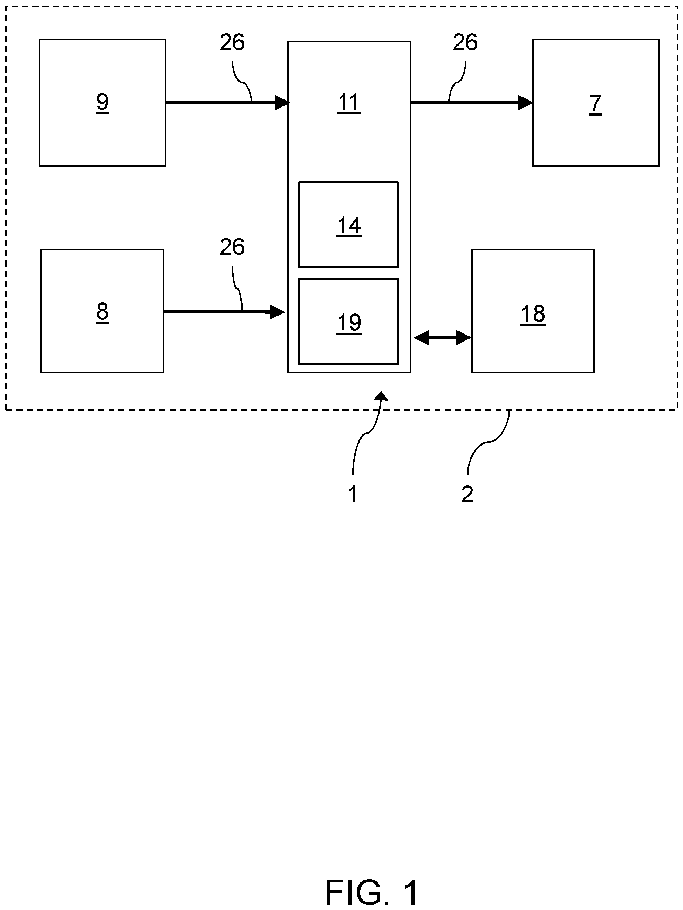

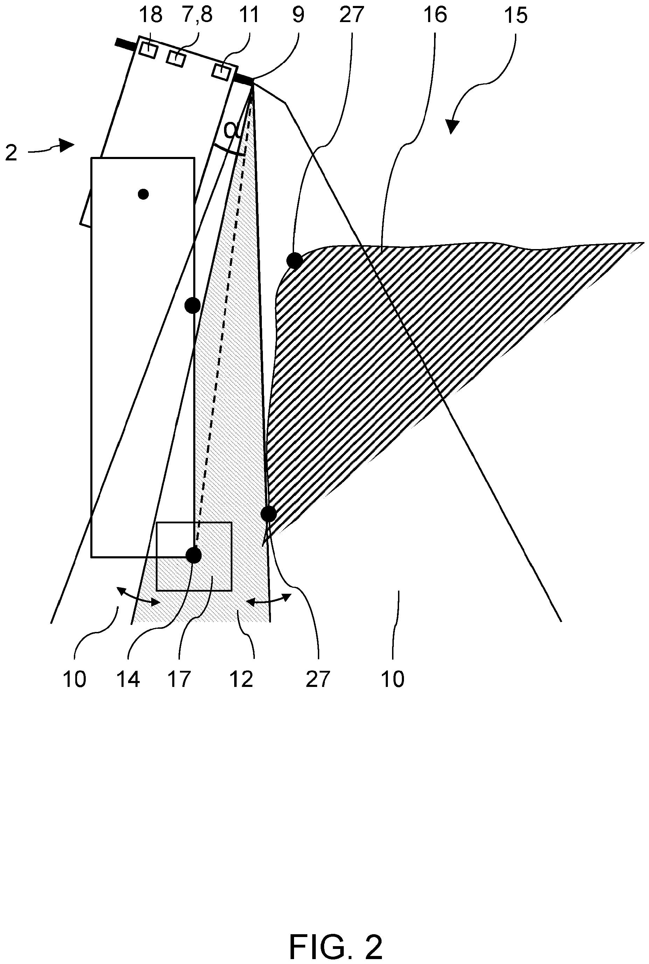

Figur 1 zeigt ein schematisches Blockdiagramm eines Sichtsystems 1 für ein Fahrzeug 2. Zur Illustration der einzelnen Komponenten und Funktionen des Sichtsystems 1 wird nachfolgend auch auf die Figuren 2 bis 5 Bezug genommen.

Das vorgestellte Sichtsystem 1 ermöglicht es, mittels einer Aufnahmeeinheit 9 ein Sichtfeld der Fahrzeugumgebung aufzunehmen und an einer Anzeigeeinheit 7 darzustellen. Der Fahrer kann eine Fokusstelle 14 auswählen, die dann aufgrund einer Vergrößerungsfunktion 19 vergrößert an der Anzeigeeinheit 7 dargestellt werden kann.

Dazu umfasst das Sichtsystem 1 eine Aufnahmeeinheit 9 zur Aufnahme von Bilddaten eines äußeren Sichtfelds und eine Anzeigeeinheit 7 zur Darstellung der aufgenommenen Bilddaten. Die Aufnahmeeinheit 9 kann beispielsweise eine oder mehrere Kamera(s), z. B. eine CCD-Kamera und/oder eine CMOS-Kamera, und/oder verschiedene Linsen umfassen. Das von der Aufnahmeeinheit 9 aufgenommene Sichtfeld umfasst beispielsweise das Sichtfeld, das dem Sichtfeld eines Hauptrückspiegels und/oder eines Weitwinkelspiegels entspricht. Es kann aber auch alternativ oder zusätzlich andere Sichtfelder umfassen, beispielsweise das Sichtfeld eines Frontspiegels, eines Rampenspiegels oder einer Rückfahrkamera. Das Sichtsystem 1 kann Teil eines Spiegelersatzsystems des Fahrzeugs 2 sein. Die Anzeigeeinheit 7 kann beispielsweise einen oder mehrere Monitore umfassen, die jeweils so im Fahrzeug 2 angeordnet sind, dass sie vom Fahrer bequem eingesehen werden können.

Die Aufnahmeeinheit 9 und die Anzeigeeinheit 7 sind mittels Signalverbindungen 26 mit einer Steuerungseinheit 11 verbunden oder können mit der Steuerungseinheit 11 verbunden werden. Die Steuerungseinheit 11 ist dazu ausgebildet, Bilddaten des aufgenommenen Sichtfelds an der Anzeigeeinheit 7 anzuzeigen. Dazu wählt die Steuerungseinheit 11 aus, welche Teilmenge der Bilddaten des aufgenommenen Sichtfelds jeweils auf der/den Anzeigefläche(n) dargestellt werden. Insbesondere kann die Darstellung das gesamte aufgenommene Sichtfeld oder nur einen Teilbereich davon umfassen.

Außerdem ist die Steuerungseinheit 11 dazu ausgebildet, ein Auswahlwerkzeug an der Anzeigeeinheit 7 anzuzeigen, mit dem der Fahrer einer Stelle des Sichtfelds auswählen kann, auf die er sich besonders fokussieren möchte. Diese auswählbare Stelle des Sichtfelds wird daher auch als Fokusstelle 14 bezeichnet. Zur Festlegung der Fokusstelle 14 steht dem Fahrer eine Eingabeeinheit 8 zur Verfügung, die ebenfalls mit der Steuerungseinheit 11 verbunden ist. Der Fahrer kann mit Hilfe der Eingabeeinheit 8 das Auswahlwerkzeug bedienen, mit dem die Fokusstelle 14 festgelegt wird.

Weiterhin ist die Steuerungseinheit 11 dazu ausgebildet, eine Vergrößerungsfunktion 19 bereitzustellen, mittels derer die festgelegte Fokusstelle 14 vergrößert auf der Anzeigeeinheit 7 darstellbar ist. Der Fahrer kann beispielsweise zuerst eine Fokusstelle 14 auswählen und festlegen. Anschließend wird diese Fokusstelle in Reaktion auf eine Betätigung der Eingabeeinheit 8 vergrößert an der Anzeigeeinheit 7 dargestellt. Zur Aktivierung der Vergrößerungsfunktion 19 kann vorzugsweise ein vorbestimmtes Bedienelement, besonders vorzugsweise ein Taster, als Teil der Eingabeeinheit 8 bereitgestellt werden. Dieses Bedienelement wird nachfolgend als Zoom-Bedienelement bezeichnet.

Üblicherweise wird an der Anzeigeeinheit 7 eines Spiegelersatz-Systems ein relativ weiträumiger Bereich der Fahrzeugumgebung dargestellt. Dem Fahrer steht damit ein guter Überblick über die Fahrzeugumgebung zur Verfügung, sodass er seine Fahrmanöver entsprechend weitsichtig planen und umsichtig durchführen kann. Benötigt der Fahrer dagegen kurzfristig einen möglichst genauen Blick auf ein bestimmtes Detail des aufgenommenen Sichtfelds, ist dies bei einer derartig weiträumigen Darstellung schwierig. Der Fahrer müsste jedes Mal zuerst die entsprechende Stelle in der Informationsmenge finden und wird dabei abgelenkt. Außerdem kann die entsprechende Stelle an der Anzeigeeinheit 7 zu klein dargestellt sein, sodass die erwünschte Detailbetrachtung gar nicht möglich ist.

Die Vergrößerungsfunktion 19 ermöglicht es dagegen, eine einmal festgelegte Fokusstelle 14 flexibel bei Bedarf durch eine einfache Betätigung der Eingabeeinheit 8, vorzugsweise immer wieder, aufzurufen und vergrößert an der Anzeigeeinheit 7 darzustellen. Auf diese Weise bekommt der Fahrer einen detailreichen Blick auf die festgelegte Fokusstelle 14 und wird während der Fahrt minimal abgelenkt. Die Sicherheit während der Fahrt kann entsprechend erhöht werden.

Außerdem kann das Sichtsystem 1 vorzugsweise dazu ausgebildet sein, die ausgewählte Fokusstelle 14 zu speichern, besonders vorzugsweise in einem nicht-flüchtigen Speicher 18 und/oder zusammen mit Daten zu einem wechselbaren Anhänger des Fahrzeugs 2 zu speichern. Auf diese Weise kann der Fahrer Fokusstellen 14, die auch für die Durchführung nachfolgender Manöver von Belang sein könnten, speichern und später, bei Bedarf, unkompliziert wieder aufrufen, ohne die Fokusstelle 14 erneut einstellen zu müssen. Wird ein nicht-flüchtiger Speicher 18 als Speichermedium verwendet, kann die Fokusstelle 14 auch nach einem vollständigen Abschalten bzw. Parken und Wieder-Anschalten des Fahrzeugs 2 aufgerufen werden.

Figur 2 zeigt ein schematisches Beispiel des Fahrzeugs 2 und der von der Aufnahmeeinheit 9 aufgenommenen Sichtfelder 10. Das Fahrzeug 2 kann beispielsweise ein Fahrzeuggespann bestehend aus einer Zugmaschine und einem Anhänger, ein LKW, ein Bus, eine Baumaschine oder ein Sattelzug sein. In der Figur 2 ist ein Beispiel gezeigt, bei dem das Fahrzeug 2 als Sattelzug ausgeführt ist.

Das Sichtsystem 1 kann Teil eines sog. Spiegel-Ersatz-Systems des Fahrzeugs 2 sein. Das Sichtsystem 1 umfasst eine Aufnahmeeinheit 9, die dazu ausgebildet ist, Bilddaten eines Sichtfelds 10, beispielsweise eines rückwärtigen, seitlichen Sichtfelds 10 des Fahrzeugs 2 bzw. der dortigen Fahrzeugumgebung 15, aufzunehmen. Die Aufnahmeeinheit 9 kann dazu mittels einer Halterung an einer Außenwand des Fahrzeugs 2 angeordnet und/oder anordenbar sein. Die Aufnahmeeinheit 9 ist z. B. an einer seitlichen vorderen Außenwand des Fahrzeugs 2 befestigt, beispielsweise an der Stelle oder nahe zu der Stelle, wo normalerweise ein herkömmlicher Außenrückspiegel angebracht wäre.

Im dargestellten Fall umfasst das aufgenommene Sichtfeld 10 vorzugsweise die Sichtfelder der Klassen II und IV entsprechend der ECE R46/04 Norm, die bei einem herkömmlichen Spiegelsystem durch die Sichtfelder eines Hauptrückspiegels und eines Weitwinkelspiegels abgedeckt werden würden. Im Beispiel der Figur 2 verläuft die dem Fahrzeug 2 zugewandte Kante des aufgenommenen Sichtfelds 10 nahezu parallel zur Wand des vorderen Fahrzeugteils (der Sattelzugmaschine), aber leicht auf das Fahrzeug 2 zu, sodass auch bei Geradeausfahrt wenigstens ein Teil der Fahrzeugwand im Bereich des aufgenommen Sichtfelds 10 liegt. Das von der Aufnahmeeinheit 9 aufgenommene Sichtfeld 10 kann vorzugsweise weitere Bereiche abdecken, die sich in etwas größerer Entfernung vom Fahrzeug 2 befinden.

Weiterhin umfasst das schematisch dargestellte Sichtsystem 1 eine Anzeigeeinheit 7 und eine Eingabeeinheit 8, die z. B. im Cockpit-Bereich des Fahrerhauses angeordnet sind. Die Anzeigeeinheit 7 und die Eingabeeinheit 8 können als gemeinsame Baugruppe ausgeführt sein, beispielsweise in Form eines Touch-Displays, oder sie können getrennt voneinander im Fahrzeug 2 angeordnet sein. Sowohl die Eingabeeinheit 8 als auch die Anzeigeeinheit 7 sind dabei vorzugsweise derart im oder am Fahrzeug 2 angeordnet, dass sie vom Fahrer bequem erreicht werden können.

Ferner umfasst das schematisch dargestellte Sichtsystem 1 eine Steuerungseinheit 11, die beispielsweise auf einem Steuergerät des Fahrzeugs 2 implementiert sein kann. Auf der Anzeigeeinheit 7 werden Bilddaten aus dem Sichtfeld 10 der Aufnahmeeinheit(en) 9 dargestellt. Die Anzeigeeinheit 7 kann eine oder mehrere Anzeigeflächen, beispielsweise Displays und/oder Projektoren mit zugehörigen Projektionsflächen, umfassen. Dabei kann die Anzeigeeinheit 7 Anzeigeflächen umfassen, die ausschließlich für die Anzeigeeinheit 7 des Sichtsystems 1 verwendet werden. Zusätzlich oder alternativ kann die Anzeigeeinheit 7 weiterhin eine oder mehrere Anzeigefläche(n) umfassen, die bereits in der Ausstattung des Fahrzeugs 2 vorhanden sind, beispielsweise eine oder mehrere Anzeigefläche(n) eines Infotainmentsystems und/oder eines Spiegelersatzsystems und/oder eines Rückfahrkamerasystems. Beispielsweise kann die Anzeigeeinheit 7 zwei Bildschirme umfassen, die z. B. im Cockpit-Bereich links- und rechtsseitig angeordnet sind. Der vom Fahrer aus gesehen rechts angeordnete Bildschirm kann die Bilddaten der rechten Aufnahmeeinheit 9 wiedergeben und der links vom Fahrer angeordnete Bildschirm die Bilddaten der linken Aufnahmeeinheit 9.

Die Eingabeeinheit 8 dient zur Erfassung von Benutzereingaben, um Funktionen des Sichtsystems zu steuern, was nachfolgend noch näher beschrieben wird. Die Steuereinheit 11 steht mit der Anzeigeeinheit 7, der Eingabeeinheit 8 und der Aufnahmeeinheit 9 in Signalverbindung und/oder ist mit der der Anzeigeeinheit 7, der Eingabeeinheit 8 und der Aufnahmeeinheit 9 in Signalverbindung bringbar. Die Steuerungseinheit 11 ist ausgebildet, die von der Aufnahmeeinheit 9 erzeugten Bilddaten zu empfangen, zu verarbeiten und eine wiedergebende Anzeige auf der Aufnahmeeinheit 9 zur Darstellung des Sichtfeldes 10 oder von Teilbereichen hiervon zu steuern.

Die Steuerungseinheit 11 ist hier ausgebildet, anzupassen, welche Bilddaten aus dem aufgenommenen Sichtfeld 10 auf der Anzeigeeinheit 7 angezeigt werden, um z. B. dem Fahrer einen sicheren Rangiervorgang unter Verwendung des Sichtsystems 1 zu ermöglichen. Ferner wird dem Fahrer ermöglicht, eine für den Fahrer besonders wichtige Stelle (hier als Fokusstelle 14 bezeichnet), die er z. B. während eines Rangiervorgangs genauer im Blick behalten möchte, auszuwählen.

Die Steuerungseinheit 11 ist hierzu ausgebildet, Bilddaten eines Teilbereichs 12 des aufgenommenen Sichtfelds 10 und ein Auswahlwerkzeug zur Auswahl der Fokusstelle 14 des Sichtfelds 10 an der Anzeigeeinheit 7 anzuzeigen. Hierbei ist die Fokusstelle 14 mittels des Auswahlwerkzeugs durch eine Betätigung der Eingabeeinheit 8 festlegbar. In Reaktion auf eine solche Betätigung der Eingabeeinheit 8 wird die Fokusstelle 14 für ein Sichtfeld 10 einer Aufnahmeeinheit 9 durch die Steuerungseinheit 11 festgelegt.

Bei der Fokusstelle 14 kann es sich um einen Punkt (Fokuspunkt) oder einen Bereich (Fokusbereich) am Fahrzeug 2 oder in der Fahrzeugumgebung 15 handeln. Üblicherweise wird eine Stelle als Fokusstelle 14 ausgewählt, die während der Fahrt, beispielsweise bei der Durchführung eines Rangiermanövers, besonders relevant ist. Beispielsweise kann eine obere hintere Ecke des Fahrzeugs 2, eines Fahrzeugaufbaus und/oder eines Anhängers, und/oder eine Begrenzungsleuchte des Fahrzeugs 2, eines Fahrzeugaufbaus oder eines Anhängers des Fahrzeugs 2, ein Reifen einer hintersten Achse des Fahrzeugs 2, ein Befestigungsmittel einer Ladung des Fahrzeugs 2 als Fokusstelle 14 festgelegt werden. In der Umgebung 15 des Fahrzeugs 2 können beispielsweise ein Hindernis 16, eine Parklücke und ein nachfolgendes Fahrzeug einer Fahrzeugkolonne besonders relevant sein und daher als Fokusstelle 14 festgelegt werden.

In Figur 2 ist die Fokusstelle 14 beispielhaft auf die rechte, hintere Kante des Fahrzeugs 2 festgelegt worden. Die Steuerungseinheit 11 ist dazu ausgebildet, in Reaktion auf die Betätigung der Eingabeeinheit 8 die Vergrößerungsfunktion zu aktivieren, sodass die Fokusstelle 14 und vorzugsweise der Bereich um die Fokusstelle 17 vergrößert an der Anzeigeeinheit 7 dargestellt werden.

Zusätzlich zu der festgelegten Fokusstelle 14 und einem Bereich 17 um die Fokusstelle 14, sind in der Figur weitere mögliche Fokusstellen 27 dargestellt. Die Steuerungseinheit 11 ist vorzugsweise dazu ausgebildet, eine Vorauswahl zur Auswahl möglicher Fokusstellen 27 an der Anzeigeeinheit 7 anzuzeigen. Bei diesen möglichen Fokusstellen 27 handelt es sich um Stellen am Fahrzeug 2 oder der Fahrzeugumgebung 15, die erfahrungsgemäß besonders relevant zur Durchführung von Fahrmanövern sind und beispielsweise vom Fahrzeughersteller vorgegeben werden können. Der Fahrer braucht zum Festlegen einer Fokusstelle 14 nur noch einen der Vorschläge auswählen, sodass eine Ablenkung reduziert wird. Besonders bevorzugt können die möglichen Fokusstellen 27 abhängig vom aktuellen Fahrbetriebsmodus vorgeschlagen werden. Hindernisse 16, die sich seitlich vom Fahrzeug 2 befinden, können besonders bei einer Rangierfahrt von Belang sein, während weiter entferntere Objekte eher während einer Fahrt mit höherer Geschwindigkeit als besonders relevant eingestuft werden können. Die festgelegte Fokusstelle 14 und/oder die möglichen Fokusstellen 27 können vorzugsweise in einem nicht-flüchtigem Speicher 18 gespeichert werden.

Wenn noch keine Fokusstelle 14 durch den Fahrer festgelegt wurde, kann vorzugsweise ein von der Steuerungseinheit 11 vorbestimmter Teilbereich vergrößert an der Anzeigeeinheit 7 dargestellt werden, wenn die Vergrößerungsfunktion aktiviert wird. Dieser vorbestimmte Teilbereich kann z. B. durch den Fahrzeughersteller oder den Flottenbetreiber festgelegt werden.

Besonders bevorzugt wählt die Steuerungseinheit 11 einen vorbestimmten Teilbereich aus, der von dem aktuellen Fahrbetriebsmodus abhängt. Bei dem aktuellen Fahrbetriebsmodus kann es sich beispielsweise um eine Rangierfahrt, eine Autobahnfahrt oder eine Stadtfahrt handeln. Je nach Fahrbetriebsmodus und/oder Fahrzeugart können unterschiedliche Bereiche besonders interessant für den Fahrer sein. Beispielsweise kann eine Detailansicht einer Befestigung einer Ladung besonders relevant sein, wenn es sich um einen offenen Anhänger mit festgezurrter Ladung, etwa Holzstämmen oder größeren Betonbauteilen handelt. Dagegen könnte beim Rückwärtsrangieren besonders eine hintere Fahrzeugkante oder ein Hindernis 16 im seitlichen, rückwärtigen Bereich der Fahrzeugumgebung 15 besonders relevant sein.

Vorzugsweise ist die Steuerungseinheit 11 dazu ausgebildet, die Fokusstelle 14 in Abhängigkeit von einer Position der Aufnahmeeinheit 9 relativ zur Fokusstelle 14 nachzuführen. Das bedeutet, dass die Steuerungseinheit 11 denjenigen Teilbereich 12 des aufgenommenen Sichtfelds 10 zur Darstellung an der Anzeigeeinheit 7 auswählen kann, der die Fokusstelle 14 und vorzugsweise den Bereich 17 um die Fokusstelle umfasst. Ändert sich die Position der Fokusstelle 14 relativ zur Position der Aufnahmeeinheit 9, beispielsweise, weil sich das Fahrzeug 2 relativ zu der festgelegten Fokusstelle 14 bewegt, kann die Steuerungseinheit 11 die an der Anzeigeeinheit 7 dargestellten Bilddaten derart verändern, dass die festgelegte Fokusstelle 14 in der Darstellung verbleibt.

Für unterschiedliche Fahrsituationen bzw. Rangiervorgänge können unterschiedliche Stellen im Sichtfeld 10 kritisch sein, z. B. ein spezielles Hindernis 16, eine Parklücke oder eine Fahrzeugkante innerhalb des Sichtfeldes 10. Ein besonderer Vorteil des vorliegenden Sichtsystems 1 ist, dass es dem Fahrer des Fahrzeugs 2 ermöglicht wird, eine beliebige Stelle des aufgenommenen Sichtbereichs 10, die er im Blick behalten möchte, um z. B. einen bevorstehenden Rangiervorgang sicher durchführen zu können, als Fokusstelle 14 auszuwählen. Das Sichtsystem 1 stellt dann sicher, dass die Fokusstelle 14 auf der Anzeigeeinheit 7 nachgeführt wird und nicht während des Rangiervorgangs aus dem Bild verschwindet. Die Sicherheit von Rangiervorgängen kann hierdurch erhöht werden.

Dazu kann die Steuerungseinheit 11 beispielsweise auf Informationen der Fahrzeugbewegung, z. B. der Geschwindigkeit, des Lenkwinkels und/oder eines Knickwinkels zwischen einem vorderen, hier dem Zugfahrzeug, und einem hinteren Fahrzeugteil, hier einem Anhänger oder Auflieger, zurückgreifen. Derartige Informationen können beispielsweise von Sensoren, z. B. Raddrehzahlsensoren, einer ABS-Sensorik und/oder einer Lenkwinkel-Sensorik, erfasst und über einen Bordcomputer zur Verfügung gestellt werden.

Zum Durchführen der Nachführung empfängt die Steuerungseinheit 11 beispielsweise eingangsseitig fortlaufend im Fahrbetrieb Daten zum Bewegungszustand des Fahrzeugs 2, etwa zu der aktuellen Geschwindigkeit, zu dem Lenkwinkel und/oder zu einem Knickwinkel zwischen einem vorderen und einem hinteren Fahrzeugteil. Diese Daten können verwendet werden, um die Position der Aufnahmeeinheit 9 relativ zur Position der festgelegten Fokusstelle 14 zu bestimmen. Zur Verdeutlichung sind in der Figur 2 eine gestrichelte Verbindungslinie zwischen der Aufnahmeeinheit 9 und der Fokusstelle 14 sowie der Winkel a zwischen dieser Verbindungslinie und dem vorderen Fahrzeugteil eingezeichnet. Verändert sich die Position der Fokusstelle 14 relativ zur Position der der Aufnahmeeinheit 9, z. B. weil sich der Knickwinkel zwischen einer Zugmaschine und einem Anhänger während einer Kurvenfahrt verändert, dann ändert sich auch der Wert des Winkels a. Die Steuerungseinheit 11 kann vorzugsweise diesen Winkel α bestimmen und den an der Anzeigeeinheit 7 dargestellten Teilbereich 12 entsprechend nachführen. Dabei ändert sich das von der Aufnahmeeinheit 9 aufgenommene Sichtfeld 10 nicht, sondern nur der Teilbereich 12 des Sichtfelds 10, der an der Anzeigeeinheit 7 dargestellt wird. In der Figur 2 soll dies durch Pfeile an den Rändern des Teilbereichs 12 verdeutlicht werden.

In einem alternativen Ansatz können anstelle von Sensordaten Bilderkennungsmethoden verwendet werden, mit denen die Steuerungseinheit 11 die festgelegte Fokusstelle 14 in den aufgenommenen Bilddaten erkennt. Die Steuerungseinheit 11 kann in diesem Fall diejenigen Teilbereiche 12 der Bilddaten zur Darstellung an der Anzeigeeinheit 7 auswählen, die die erkannten Fokusstelle 14 und vorzugsweise einen Bereich 17 um die Fokusstelle beinhalten. Derartige Bilderkennungsmethoden sind im Stand der Technik grundsätzlich bekannt und sollen daher nicht weiter thematisiert werden.

Selbstverständlich können beide Ansätze zur Nachführung der Fokusstelle 14 kombiniert werden, um besonders zuverlässige Darstellungen zu erhalten. Außerdem wurden der Winkel α sowie die Verbindungslinie zwischen der Fokusstelle 14 und der Aufnahmeeinheit 9 vor allem zu Illustrationszwecken in der Figur dargestellt. Die Steuerungseinheit 11 kann diese beiden Werte bestimmen, um geeignete Teilbereiche 12 aus den Bilddaten auszuwählen, es ist aber auch möglich, dass eine Nachführung ohne die explizite Bestimmung dieser beiden Werte erfolgt.

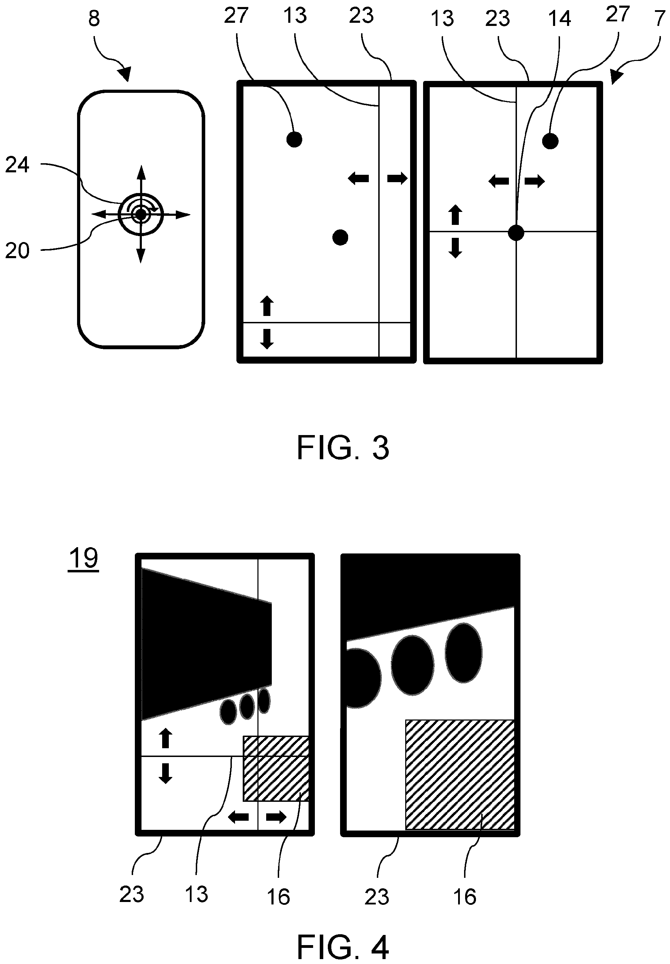

Figur 3 illustriert beispielhaft das Festlegen einer Fokusstelle 14 durch den Benutzer. Dazu ist in der Figur jeweils eine Ausführungsform einer Eingabeeinheit 8 sowie einer Anzeigeeinheit 7 dargestellt.

Die Anzeigeeinheit 7 kann z. B. als mindestens ein Anzeigebildschirm bzw. als mindestens eine Anzeigefläche 23 ausgeführt sein, der bzw. die im Cockpitbereich des Fahrzeugs angeordnet ist. Die Anzeigeeinheit 7 umfasst im dargestellten Ausführungsbeispiel eine Anzeigefläche 23, z. B. einen Spiegelmonitor, auf dem ein Auswahlwerkzeug 13, hier dargestellt als Fadenkreuz mit Pfeilelementen, dargestellt wird. Der Fahrer kann mittels der Eingabeeinheit 8 das Fadenkreuz verschieben, z. B. durch entsprechende Steuerung eines Bedienhebels 24. Sobald er die Mitte des Fadenkreuzes auf die gewünschte Stelle positioniert hat, kann er diese Stelle als Fokusstelle auswählen, z. B. durch Betätigung eines (nicht dargestellten) Bestätigungselements oder, falls kein solches Bestätigungselement vorgesehen ist, z. B. durch Drücken des Bedienhebels 24.

In der Figur 3 illustriert die linke Anzeigeeinheit 23 die Situation, in der noch keine Fokusstelle 14 festgelegt wurde. Optional werden von der Steuerungseinheit vorgeschlagene, mögliche Fokusstellen 27 angezeigt. Der Benutzer kann eine der möglichen Fokusstellen 27 auswählen, indem er das Auswahlwerkzeug 13 auf eine der möglichen Fokusstellen 27 bewegt. In Fällen, in denen die Anzeigeeinheit 7 z. B. als Touch-Display ausgeführt ist, kann der Benutzer eine mögliche Fokusstelle 27 durch Berührung des Bildschirms als Fokusstelle 14 festlegen. Zusätzlich oder alternativ kann ein zusätzliches optionales Bedienelement, z. B. ein Taster, zum Durchschalten der möglichen Fokusstellen 27 vorgesehen sein. Weiter zusätzlich oder alternativ können die möglichen Fokusstellen 27 mittels eines Bedienhebels 20, z. B. durch kurzes Verschwenken, durchgeschaltet werden. Die rechte Anzeigeeinheit 23 illustriert die Situation, in der eine Fokusstelle 14 festgelegt wurde, indem das Auswahlwerkzeug 13 auf die Fokusstelle 14 bewegt wurde. Bei der dargestellten Anzeigefläche 23 handelt es sich bevorzugt um zwei verschiedene Darstellungen auf demselben Bildschirm.

Alternativ können aber z. B. auch zwei separate Anzeigeflächen 23 vorgesehen sein, die einer Aufnahmeeinheit 9 zugeordnet sind, auf denen unterschiedliche Teilbereiche 12 des aufgenommenen Sichtfelds 10 mit gleichen oder unterschiedlichen Vergrößerungsstufen gleichzeitig dargestellt sein können. Beispielsweise könnte in dieser Variante die linke Anzeigefläche 23 das gesamte aufgenommene Sichtfeld 10, inklusive gesetzlich vorgeschriebener Sichtfelder, darstellen. Ein Bildausschnitt, der die so festgelegte Fokusstelle 14 umfasst, könnte gleichzeitig auf der rechten Anzeigefläche 23 dargestellt werden. In einer alternativen Ausführungsform könnte die Anzeigeeinheit 7 aus einer anderen Anzahl an Anzeigeflächen 23 bestehen, und/oder die Anzeigeflächen 23 könnten an verschiedenen Positionen im Fahrzeug angeordnet sein. Alternativ könnten die Anzeigeflächen 23 auf einem gemeinsamen Monitor darstellbar sein.

Die Anzeigeeinheit 7 ist in der Figur 3 zur besseren Übersichtlichkeit unmittelbar neben der Eingabeeinheit 8 in ähnlicher Größe dargestellt. Es ist selbstverständlich möglich, dass die Eingabeeinheit 8 und die Anzeigeeinheit 7 nicht in unmittelbarer Nähe zueinander angeordnet sind. Ferner können die Anzeigeeinheit 7 und die Bedieneinheit 8 unterschiedliche Größenverhältnisse aufweisen. Tatsächlich wird die Anzeigeeinheit 7 in der Praxis in den meisten Fällen größer ausgeführt sein als die Eingabeeinheit 8.

Die Eingabeeinheit 8 umfasst vorzugsweise einen Bedienhebel 24, z. B. einen Joystick, ein optionales Betätigungselement (nicht dargestellt) zum Festlegen einer Fokusstelle 14 sowie ein weiteres optionales Zoom-Bedienelement 20 zum Aktivieren der Vergrößerungsfunktion, die nachfolgend noch näher beschrieben wird. Für jede Aufnahmeeinheit kann entweder eine eigene Eingabeeinheit 8 vorgesehen sein, oder es ist umschaltbar, für welche Aufnahmeeinheit mittels der Eingabeeinheit 8 eine Fokusstelle 14 festgelegt wird. Die Eingabeeinheit 8 kann z. B. als Türmodul realisiert sein, d. h. fahrseitig im Türbereich angeordnet sein.

Der Bedienhebel 24 kann beispielsweise als schwenkbarer und/oder drehbarer Joystick ausgeführt sein. Eine Drehung des Bedienhebels 24 kann beispielsweise einen Vergrößerungsfaktor der Vergrößerungsfunktion einstellen. Durch ein Verschwenken des Bedienhebels kann das Auswahlwerkzeug 13 zur Auswahl der Fokusstelle 14 bedient werden. Das Betätigen des Bedienelements zum Festlegen der Fokusstelle 14 kann eine mittels des Auswahlwerkzeugs 13 ausgewählte Fokusstelle 14 festlegen. Der Bedienhebel 24 kann derart ausgeführt sein, dass der Hebel durch eine Knickbewegung verschwenkt wird. Alternativ kann es sich um ein Element handeln, der durch eine seitliche Verschiebung verschwenkt werden kann. Das Betätigen des Zoom-Bedienelements 20 kann die Vergrößerungsfunktion aktivieren.

Eine Ausführungsform der Vergrößerungsfunktion 19 ist in Figur 4 illustriert. Dargestellt ist links eine Anzeigefläche 23 der Anzeigeeinheit 7 in einem Zustand vor Aktivierung der Vergrö-βerungsfunktion 19. Auf der linken Anzeigefläche 23 ist ein Teilbereich 12 des aufgenommenen Bildausschnitts 10 zu sehen. In der oberen Hälfte der linken Anzeigeeinheit 23 ist schematisch ein hinteres Teil des Fahrzeugs 2 zu sehen. Unten rechts ist auf der linken Anzeigeeinheit 23 schematisch ein Hindernis 16 zu sehen. Um beispielsweise bei einem Rangiermanöver einen genaueren Blick auf das Hindernis 16 zu haben und damit besser erkennen zu können, wann das Fahrzeug 2 dem Hindernis zu nahe kommen könnte, ist das Auswahlwerkzeug 13 auf das Hindernis 16 verschoben worden.

Zur Aktivierung der Vergrößerungsfunktion kann die Eingabeeinheit 8 z. B. ein Zoom-Bedienelement 20, vorzugsweise einen Taster, umfassen. Die Steuerungseinheit 11 ist dazu ausgebildet, vorzugsweise in Reaktion auf eine Betätigung des Zoom-Bedienelements 20, die Vergrößerungsfunktion 19 zu aktivieren. Bei Aktivierung der Vergrößerungsfunktion 19 wird der Bereich 17 um die Fokusstelle 14 vergrößert dargestellt. Die in der Figur 4 rechts dargestellte Anzeigefläche 23 der Anzeigeeinheit 7 zeigt diese in einem Zustand nach Aktivierung der Vergrößerungsfunktion 19. Die Vergrößerungsstufe kann beispielsweise auf einen vorbestimmten Wert festgelegt werden, vom Fahrer ausgewählt werden oder abhängig von der Fahrgeschwindigkeit des Fahrzeugs festgelegt werden. Auf diese Weise kann der Fahrer den Bereich 17 um die Fokusstelle 14 mit größerem Detailreichtum überwachen.

Dabei ist es je nach Ausführungsform möglich, dass der vergrößerte Bildausschnitt dauerhaft nach einem vorbestimmten Zeitraum, z. B. nach 10 Sekunden, zu dem Bildausschnitt zurückwechselt, der vor Aktivierung der Vergrößerungsfunktion 19 dargestellt wurde. Alternativ kann die Vergrößerungsfunktion 19 auch so lange aktiviert bleiben, solange der Fahrer das Zoom-Bedienelement 20 betätigt hält, und bei Beendigung der Betätigung sofort zu der vorherigen Anzeige zurückwechseln. Weiterhin alternativ wäre es auch möglich, dass der vergrößerte Bildausschnitt auf einer anderen Anzeigefläche 23 angezeigt wird, sodass gleichzeitig der unvergrößerte Bildausschnitt auf einer ersten Fläche und der vergrößerte Bildausschnitt auf einer zweiten Anzeigefläche 23 angezeigt wird.

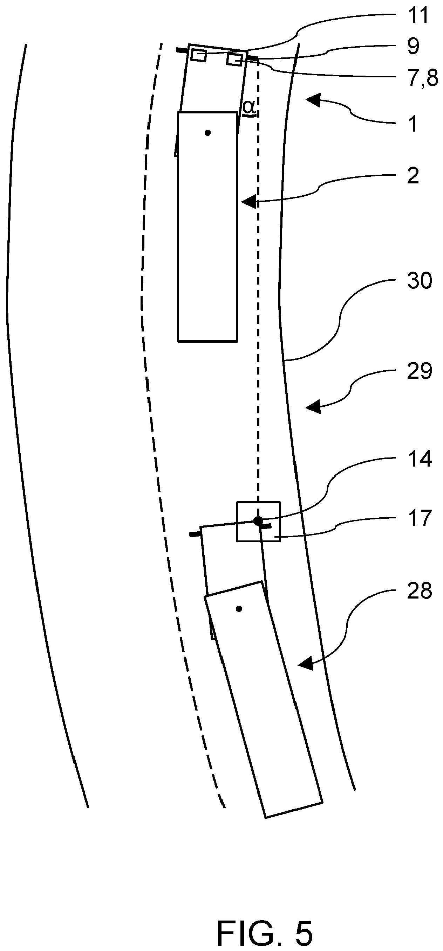

Figur 5 zeigt eine beispielhafte Anwendungsmöglichkeit für die Vergrößerungsfunktion, bei der die Fokusstelle 14 auf ein Objekt festgelegt wird, das nicht Teil des eigenen Fahrzeugs 2 ist.

Dargestellt ist beispielhaft ein Fahrzeug 2 auf einer Straße 30, während einer Kolonnenfahrt in einer Fahrzeugkolonne 29. Dabei kann es für den Fahrer relevant sein, ob es sich bei dem nachfolgenden Fahrzeug 28 um ein Fahrzeug handelt, das zur Fahrzeugkolonne 29 gehört. In der Darstellung eines herkömmlichen Spiegel-Ersatz-Systems, das ein großes Sichtfeld um das Fahrzeug zeigt, könnte das nachfolgende Fahrzeug 28 zu klein und/oder mit zu geringer Auflösung dargestellt werden, sodass der Fahrer das nachfolgende Fahrzeug 28 nicht detailreich genug erkennen kann.

Daher kann die Fokusstelle 14 vorzugsweise auf die vordere rechte Kante des nachfolgenden Fahrzeugs 28 festgelegt werden. Bei einer Aktivierung der Vergrößerungsfunktion 19 wird der Bereich 17 um die Fokusstelle 14 vergrößert auf der Anzeigeeinheit 7 dargestellt, sodass der Fahrer unkompliziert prüfen kann, welches Fahrzeug sich hinter ihm befindet.

Außerdem kann die Steuerungseinheit 11 optional ferner dazu ausgebildet sein, den Teilbereich 17 um die Fokusstelle 14 an der Anzeigeeinheit 7 nachzuführen. Dazu kann vorzugsweise die Position der Aufnahmeeinheit 9 relativ zur Position der Fokusstelle 14 bestimmt werden. Da sich die festgelegte Fokusstelle 14 im in der Figur dargestellten Beispiel ebenfalls relativ zur Straße 30 bewegt, kann die Verwendung von Bilderkennungsmethoden zur Nachführung der an der Anzeigeeinheit 7 dargestellten Bilddaten besonders vorteilhaft sein. Sensordaten bezüglich des Bewegungszustands des Fahrzeugs 2 können dennoch zusätzlich zur präzisen Nachführung verwendet werden. Eine Nachführung der Fokusstelle 14, bei der Bewegungsdaten des nachfolgenden Fahrzeugs 28 zusätzlich zu Bewegungsdaten des eigenen Fahrzeugs 2 zur Bestimmung des Winkels α verwendet werden, können sogar ohne die Verwendung von Bilderkennungsmethoden auskommen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale der unabhängigen Ansprüche jeweils unabhängig voneinander offenbart. Zusätzlich sind auch die Merkmale der Unteransprüche unabhängig von sämtlichen Merkmalen der unabhängigen Ansprüche offenbart.

### Bezugszeichenliste

- 1: Sichtsystem
- 2: Fahrzeug
- 7: Anzeigeeinheit
- 8: Eingabeeinheit
- 9: Aufnahmeeinheit
- 10: Sichtfeld
- 11: Steuerungseinheit
- 12: Teilbereich
- 13: Auswahlwerkzeug
- 14: Fokusstelle
- 15: Fahrzeugumgebung
- 16: Hindernis
- 17: Bereich um Fokusstelle
- 18: Speicher
- 19: Vergrößerungsfunktion
- 20: Zoom-Bedienelement
- 23: Anzeigeflächen
- 24: Bedienhebel
- 26: Signalverbindung
- 27: Mögliche Fokusstellen
- 28: Nachfolgendens Fahrzeug
- 29: Fahrzeugkolonne
- 30: Straße

## Patentansprüche

1. Sichtsystem (1) für ein Fahrzeug (2), wobei das Sichtsystem (1) umfasst:
eine Anzeigeeinheit (7) und eine Eingabeeinheit (8) für einen Fahrer des Fahrzeugs (2);
eine Aufnahmeeinheit (9) zur Aufnahme von Bilddaten eines äußeren Sichtfelds (10), vorzugsweise eines seitlichen rückwärtigen Sichtfelds, des Fahrzeugs (2);
eine mit der Anzeigeeinheit (7), der Eingabeeinheit (8) und der Aufnahmeeinheit (9) in Signalverbindung (26) stehende oder bringbare Steuerungseinheit (11), die dazu ausgebildet ist,
Bilddaten des aufgenommenen Sichtfelds (10) und ein Auswahlwerkzeug (13) zur Auswahl einer Fokusstelle (14) des Sichtfelds (10) an der Anzeigeeinheit (7) anzuzeigen, wobei die Fokusstelle (14) mittels des Auswahlwerkzeugs (13) durch eine Betätigung der Eingabeeinheit (8) festlegbar ist,
in Reaktion auf die Betätigung der Eingabeeinheit (8) die Fokusstelle (14) festzulegen, und
eine Vergrößerungsfunktion (19) bereitzustellen, mittels derer die festgelegte Fokusstelle (14) vergrößert auf der Anzeigeeinheit (7) darstellbar ist.

2. Sichtsystem (1) nach Anspruch 1,
wobei die Eingabeeinheit (8) ein Zoom-Bedienelement (20), vorzugsweise einen Taster, zur Aktivierung der Vergrößerungsfunktion (19) umfasst und die Steuerungseinheit (11) dazu ausgebildet ist, in Reaktion auf eine Betätigung des Zoom-Bedienelements (20) die Vergrößerungsfunktion (19) zu aktivieren.

3. Sichtsystem (1) nach Anspruch 2,
wobei die Steuerungseinheit (11) dazu ausgebildet ist, die aktivierte Vergrößerungsfunktion (19)
a) in Reaktion auf eine erneute Betätigung des Zoom-Bedienelements (20) oder in Reaktion auf eine Betätigung eines weiteren Bedienelements der Eingabeeinheit (8) und/oder
b) nach einer vorbestimmten Zeitdauer
wieder zu deaktivieren.

4. Sichtsystem (1) nach einem der vorherigen Ansprüche,
wobei die Steuerungseinheit (11) dazu ausgebildet ist, falls noch keine Fokusstelle (14) mittels der Eingabeeinheit (8) festgelegt wurde, einen vorbestimmten Teilbereich (12) des Sichtfelds (10) als Fokusstelle (14) festzulegen, die in Reaktion auf eine Aktivierung der Vergrößerungsfunktion (19) vergrößert auf der Anzeigeeinheit (7) dargestellt wird.

5. Sichtsystem (1) nach einem der vorherigen Ansprüche,
wobei die Steuerungseinheit (11) dazu ausgebildet ist, die ausgewählte Fokusstelle (14) zu speichern, vorzugsweise in einem nicht-flüchtigen Speicher (18) und/oder zusammen mit Daten zu einem wechselbaren Anhänger des Fahrzeugs (2) zu speichern.

6. Sichtsystem (1) nach einem der vorherigen Ansprüche,
wobei die Steuerungseinheit (11) dazu ausgebildet ist, eine Vorauswahl zur Auswahl möglicher Fokusstellen (27) auf der Anzeigeeinheit (7) anzuzeigen, wobei vorzugsweise die Vorauswahl möglicher Fokusstellen (27) zumindest eine der folgenden umfasst:
a) eine obere hintere Ecke des Fahrzeugs (2), eines Fahrzeugaufbaus und/oder eines Anhängers,
b) eine Begrenzungsleuchte des Fahrzeugs (2), eines Fahrzeugaufbaus oder eines Anhängers des Fahrzeugs (2),
c) einen Reifen einer hintersten Achse des Fahrzeugs (2),
d) ein Befestigungsmittel einer Ladung des Fahrzeugs (2),
e) ein Hindernis (16),
f) eine Parklücke,
g) ein nachfolgendes Fahrzeug (28) einer Fahrzeugkolonne (29), vorzugsweise einer Fahrzeugkolonne (29) im Autobahnbetrieb.

7. Sichtsystem (1) nach einem der vorherigen Ansprüche,
wobei das Auswahlwerkzeug (13) zur Auswahl der Fokusstelle (14) zumindest eines der folgenden auf der Anzeigeeinheit (7) angezeigten Elemente umfasst: ein Fadenkreuz, eine Lupe und Navigationspfeile zur Richtungsverschiebung der Fokusstelle (14).

8. Sichtsystem (1) nach einem der vorherigen Ansprüche,
wobei die Eingabeeinheit (8) zur Steuerung des Auswahlwerkzeugs (13) Pfeiltasten, einen Bedienhebel (24), z. B. einen Joystick, und/oder eine berührungsempfindliche Fläche der Anzeigeeinheit (7) umfasst.

9. Sichtsystem (1) nach einem der vorherigen Ansprüche,
wobei die Eingabeeinheit (8) einen schwenkbaren und drehbaren Bedienhebel (24), beispielsweise einen schwenkbaren und drehbaren Joystick, umfasst, wobei
a) durch Drehung des Bedienhebels (24) ein Vergrößerungsfaktor für die Darstellung der Fokusstelle (14) veränderbar ist; und/oder
b) durch Verschwenken des Bedienhebels (24) das Auswahlwerkzeug (13) zur Auswahl der Fokusstelle (14) bedient wird; und/oder
c) durch Betätigung eines am Bedienhebels (24) oder angrenzend hierzu angebrachten Tasters die Vergrößerungsfunktion (19) aktivierbar ist.

10. Sichtsystem (1) nach einem der vorherigen Ansprüche,
wobei die Steuerungseinheit (11) dazu ausgebildet ist, eine Konfiguration der Vergrößerungsfunktion (19) abhängig von einem aktuellen Fahrbetriebsmodus des Fahrzeugs (2) festzulegen, wobei vorzugsweise der aktuelle Fahrbetriebsmodus einen Rangierfahrbetrieb und mindestens einen Nicht-Rangierfahrbetrieb, beispielsweise eine Kolonnenfahrt und/oder eine Autobahnfahrt, des Fahrzeugs (2) umfassen kann.

11. Sichtsystem (1) nach Anspruch 10,
wobei die Konfiguration der Vergrößerungsfunktion (19) umfasst, dass abhängig von dem aktuellen Fahrbetriebsmodus festgelegt wird:
- der vorbestimmte Teilbereich (12) gemäß Anspruch 4; und/oder
- eine Aktivierungszeitdauer für die Vergrößerungsfunktion (19), nach deren Ablauf die Vergrößerungsfunktion (19) automatisch deaktiviert wird; und/oder
- die Vorauswahl zur Auswahl möglicher Fokusstellen (27) gemäß Anspruch 6.

12. Sichtsystem (1) nach einem der vorherigen Ansprüche,
wobei die Steuerungseinheit (11) dazu ausgebildet ist, die vergrößerte Darstellung der Fokusstelle (14) und mindestens einen weiteren Teilbereich (12) des aufgenommenen Sichtfelds (10), vorzugsweise in nicht-vergrößerter Darstellung, auf unterschiedlichen Anzeigeflächen (23) der Anzeigeeinheit (7) darzustellen; und/oder
wobei die Anzeigeeinheit (7) eine Anzeigefläche (23) eines Infotainmentsystems und/oder eine Anzeigefläche (23) eines Spiegelersatzsystems und/oder eine Anzeigefläche (23) eines Rückfahrkamerasystems umfasst.

13. Sichtsystem (1) nach einem der vorherigen Ansprüche,
wobei die Steuerungseinheit (11) dazu ausgebildet ist, anzupassen, welcher Teilbereich (12) des aufgenommenen Sichtfelds (10) auf der Anzeigeeinheit (7) in Form von Bilddaten angezeigt wird, derart, dass eine Anzeige der festlegten Fokusstelle (14) in Abhängigkeit einer Position der Aufnahmeeinheit (9) relativ zur Fokusstelle (14) an der Anzeigeeinheit (7) nachgeführt wird.

14. Spiegelersatzsystem für ein Fahrzeug (2), aufweisend ein Sichtsystem (1) nach einem der Ansprüche 1 bis 13.

15. Fahrzeug (2), vorzugsweise Nutzfahrzeug, besonders bevorzugt ein Lkw, ein Bus, eine Baumaschine, ein Lastzug oder ein Sattelzug, aufweisend ein Sichtsystem (1) nach einem der Ansprüche 1 bis 13 oder ein Spiegelersatzsystem nach Anspruch 14.
